**Europäisches Patentamt**

**European Patent Office**

**Office européen des brevets**

(19)

(11) Publication number: **0 162 662**

**A2**

(12) # EUROPEAN PATENT APPLICATION

(21) Application number: **85303425.4**

(22) Date of filing: **15.05.85**

(51) Int. Cl.⁴: **H 04 M 1/72**

(30) Priority: **15.05.84 US 610421**

(43) Date of publication of application:
**27.11.85 Bulletin 85/48**

(84) Designated Contracting States:
**CH DE FR GB LI NL SE**

(71) Applicant: **Crimmins, James W.**
**15 Nutmeg Lane**
**Wilton Connecticut 06897(US)**

(72) Inventor: **Crimmins, James W.**
**15 Nutmeg Lane**
**Wilton Connecticut 06897(US)**

(74) Representative: **Arthur, Bryan Edward et al,**
**Withers & Rogers 4 Dyer's Buildings Holborn**
**London EC1N 2JT(GB)**

(54) **Communication systems.**

(57) An FM communication system in which AM modulation, applied to narrowband FM modulated signal, effects an improvement in power use and audio fidelity in portable units. By use of an AM scheme, radiated power is enhanced at frequency extremes to counteract the effects of narrowband FM systems while radiated power is minimized for low amplitude, modulating signals associated with limited carrier frequency deviations. As the amplitude of the signal to be transmitted decreases during quiet intervals, the power of the transmitted FM signal correspondingly decreases. A corresponding remote battery powered unit and a base unit are typically provided. Each includes an FM-AM transmitter. The power of the transmitted signal from the remote unit is adjusted according to the signal level received from the first unit, to compensate for signal levels lost over long distances and avoid unnecessary power drain for short distances and low information content situations. The system typically utilizes infrared light as the transmission medium. Pulse activation of infrared emitting diodes with the FM-AM modulated signal to provide limited range and thus privacy.

FIG. 2

The present invention relates to communication systems, in particular telephone communication systems incorporating a remote unit and a base unit having infrared communication therebetween.

The effectiveness and usefulness of telephone systems having remote hand sets is directly related to the usable distance from the base unit at which the hand set may be operated without distorted audio reproduction, and the useful lifetime that the handset may have on one battery charge. Previous handset transmitters have incorporated excessively powered transmitter units and exotic received systems to insure a reasonable usable range from the base unit that the handset may be operated for undistorted audio. However, the cost of expensive circuitry and high battery drain has limited the usefulness of such systems.

In communication systems with remote handsets incorporating frequency modulated infrared radiation, the transmitted energy is typically maintained at a constant level and the information is transmitted as a variation in the repetition rate of pulses of infrared radiation. To maintain receiver quieting, a fixed, substantially high level of radiation is emitted by both the portable and base units to provide a high-signal-to-noise ratio in the demodulated signal at the associated receivers.

It is an object of the present invention to provide a communication system allowing a portable communication link, such as between a cordless infrared telephone handset and a complementary transmitter receiver connected to the phone line, which provides a maximum communication range for undistorted sound with a reduced battery consumption. According to one aspect of the invention, we provide a communication system comprising:

at least first and second stations each having transmitting means and receiving means operative to permit signals to be exchanged between said stations;

means associated with at least one of said stations for controlling the associated transmitting means to automatically vary its transmitted output level in accordance with the distance between it and another station with which it is exchanging signals.

According to another aspect of this invention we provide In a communication system a first transmitter comprising:

an oscillator having a centre frequency according to a baseband signal to produce a frequency modulated signal; and

means for amplitude modulating said frequency modulated signal according to the magnitude of said baseband signal to reduce the frequency modulated signal when the amplitude of said baseband signal is low and to increase the frequency modulated signal with frequency deviation from said centre frequency.

Amplitude modulating (AM) transmitted, frequency modulated (FM) signals with a full-wave rectification of the modulating signal provides an enhanced amplitude signal at the frequency extremes of the FM modulation and a reduced transmitter output when the modulating signal amplitude is low, resulting in substantially undistorted sound with a reduced battery consumption. The AM modulated FM signal is expressed as a pulse sequence applied to infrared light emitting diodes (LEDs) which in turn can provide infrared radiation in a room enviroment containing light receivers for recovering the AM modulated FM signal. The repetition rate of the pulses is a function of the FM modulation while the amplitude modulation provides a separate adjustment of the energy content perpulse and pulse-width so that the transmitted light pulses are adjusted in frequency by the modulation signal and in energy level by the amplitude of the modulating signal. The AM modulation follows a linear relationship between signal amplitude and the level of the power into the LEDs. The amplitude modulation of the pulse power also introduces no significant phase modulation. The AM-FM transmission, in conbination with phase distortion compensation overcomes the cut-off skirts of the narrow-band FM systems.

A narrow-band demodulator is provided at the corresponding light receiver to recover the original modulating signal.

The overall modulation and demodulator system provides low power consumption communication while maintaining a high signal-to-noise ratio with low distortion. The communication system according to the present invention results in a typical improvement in battery charge utilization by a factor of three-to-one.

The present invention is adapted to fit onto a remote transmitter receiver unit and is dimensioned to be cradled on a standard telephone desk set. A desk set power supply, powered from the wall outlet, includes electrical contacts that apply power to the remote unit, while cradled in the desk set, to recharge the batteries of the remote unit. The transmitter and receiver operative with the telephone lines associated with a desk or base unit.

The present invention allows a two-way infrared communication link, particularly between a base unit connected to the telephone lines and a portable unit accessing those lines via the infrared communication link. The infrared signals are both FM and AM modulated with narrowband FM or pulse rate modulation used to provide a good signal to noise ratio and provide efficiency through pulse activation of infrared emitters. AM modulation enhances signal amplitudes on extremes of FM frequency excursions and this counteract narrowband FM efficiencies and suppresses battery consuming transmissions in periods of low information content.

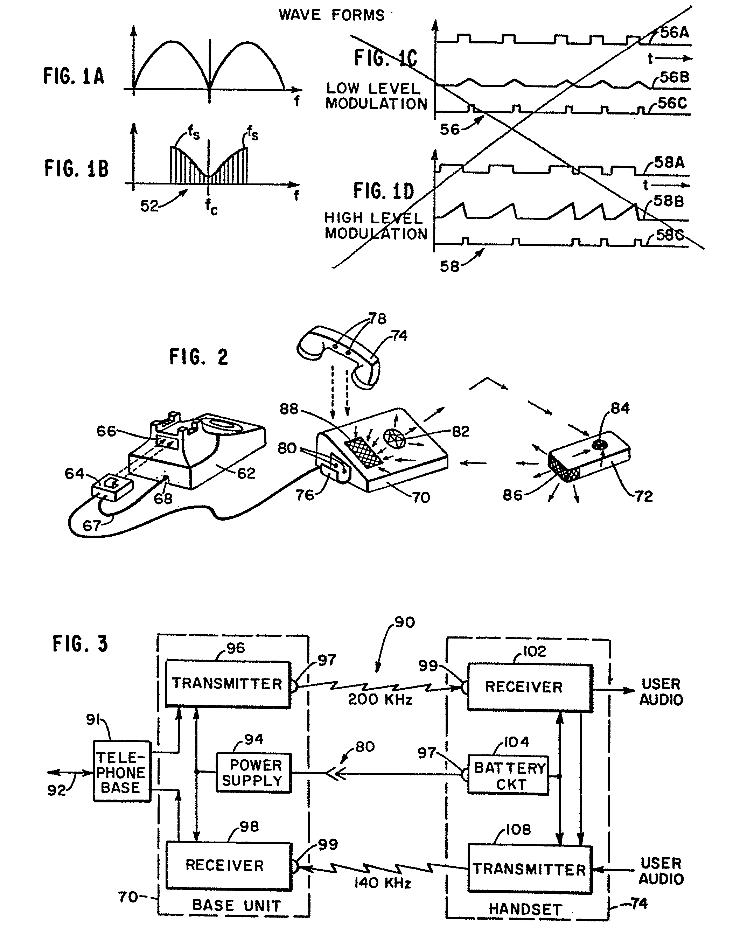

The nature of the infrared signals of the communication system of the present invention is shown in the wave form diagrams of Figs. 1A-1B. Fig. 1A represents the audio, or voice, modulating signal after full-wave rectification. The transmitted signal power density versus frequency is shown as a plot 52, in Fig. 1B having a carrier fc, and side-bands fs, resulting from frequency modulation typically by an audio signal. Higher amplitudes of modulating signal produce a higher amplitude at the extremes of the frequency spectrum for the FM modulation, peaking these to counteract the narrow bandwidths. Lower levels conserve power overall without a loss of signal-to-noise ratio.

These and other features of the present invention will will be better appreciated by reading the following, solely exemplary, detailed description together with the drawings wherein:

Figs. 1A - 1B are representative waveform diagrams showing representative FM-AM modulating and modulated signals and spectrums used in the present invention;

Fig. 2 is a pictorial representation of one embodiment of the present invention;

Fig. 3 is a general block diagram of the systems of Figs. 1 and 2;

Fig. 4 is a schematic diagram of transmitter circuitry used in the block diagram of Fig. 3;

Fig. 5 is a schematic diagram of portable receiver circuitry used in the block diagram of Fig. 3;

Fig. 6 is a schematic diagram of base receiver circuitry used in the block diagram of Fig. 3;

Fig. 7 is a schematic diagram of base unit power supply circuitry;

Fig. 8 is the schematic diagram of portable battery charging circuitry;

Fig. 9 is a block diagram of phase distortion correction circuit associated with the transmitter of Fig. 4;

Fig. 9A is a schematic circuit diagram of a pre-distorter used in the diagram of Fig. 9; and

Fig. 10 is a block diagram of phase correction circuitry used in the invention.

Figs. 2 and 3 respectively show the physical components and a functional block diagram of a communication system of the present —————————————————————————————

invention. In Fig. 2, standard telephone desk set 62 has a portion of the system contained within a module 64 located in the hand hold recess 66 and is connected by cabling 67 to the desk set socket 68 that accesses the lines to the telephone network. The block module 64 is connected to a base unit 70 operative to communicate to a remote transmitter and receiver unit 72 or remote transmitter and receiver handset 74. The remote handset 74, or alternatively,the remote hand held unit 72 includes contacts 78 to mate with the contacts 80 within a cradle 76 of the base unit 70 to supply charging current for batteries within the handset 74 when placed within the cradle 76. A similar charging scheme for the hand hold unit 72 may also be employed.

When the system is operational, phone line signals received at the telephone desk set 62 are coupled to the base unit 70 and transmitted on a first channel and frequency as infrared radiant energy from a source 82 to a radiation detector 84 and receiver located within the remote unit 72 or corresponding components in handset 74. A second channel of communication is provided from the remote unit 72 (or handset 74) to the base unit 70 at a second carrier frequency by a second transmitter and infrared radiator 86 at the remote unit 72 (or similar components on handset 74). The second channel signal is detected by a sensor 88 on the base unit 70. The detected signal is demodulated and coupled through the telephone desk set 62 to the phone lines.

A system block diagram is shown in Fig. 3. A telephone base 90, corresponding to module 64, is connected to standard telephone lines 92 and operates as a coupler, providing signals to and receiving signals from the base unit 70. The base unit 70 includes a transmitter 96 and a receiver 98, as well as a power supply 94 providing power to the transmitter and receiver as well as to a battery 104 within the handset 74 through contacts 80. The handset 74 includes a receiver 102 and a transmitter 108 having infrared frequencies corresponding to those of transmitter 96 and receiver 98 respectively housed in the base unit 70A. Infrared emitters 97 and detectors 99 are associated with each transmitter 96, 108 and receiver 102, 98.

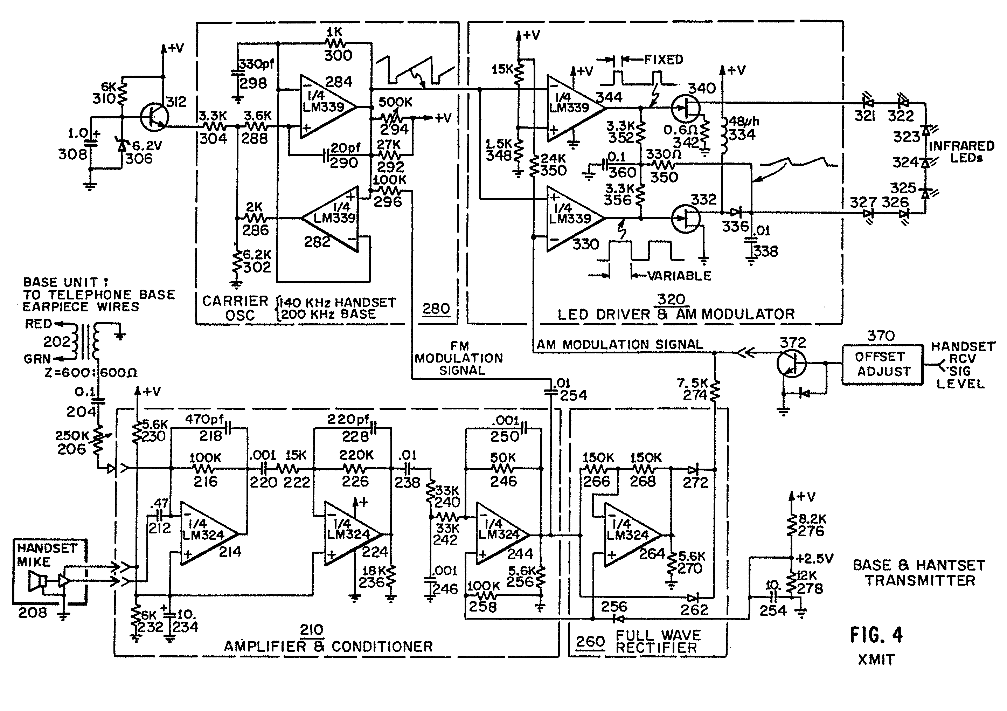

A transmitter for use in handset 74 or base unit 70 is shown in detail in the schematic circuit diagram of Fig. 4. The transmitters within the base unit 70 and the remote unit handset 74 are essentially identical except for the adjustment of the oscillator carrier frequency, and the source of the input signals. In particular, the base unit 70 receives an input signal from the telephone base earpiece wires, typically the red and green wires. The signal is applied to a transformer 202 having a 600 ohm impedence and a one-to-one turns ratio. The signal is thereafter coupled to the transmitter input through a capacitor 204 and level adjusting resistor 206.

In the case where the handset is in the  transmitter 108, a signal is applied from a handset microphone assembly 208 having an electret microphone and an internal FET amplifier.  The signal from the microphone 208 is received through a capacitor 212 and coupled to an amplifier 214.  The amplifier and conditioner section 210 provides a predetermined amount of pre-emphasis and tone compensation according to the system of the present invention.  The amplifier 214 has a feedback resistor 216 and capacitor 218 to provide a predetermined amount of gain and tone contour. The output of the amplifier 214 is connected through capacitor 220 and resistor 222 to the input of an amplifier 224.  The amplifier 224 has a feedback resistor 226 and capacitor 228, which, in combination with capacitors 220 and 224, creates the desired pre-emphasis characteristics.  The non-inverting input voltage of the amplifiers 214 and 224, and the microphone 208 power is provided by a voltage divider including resistor 230 and resistor 232, bypassed by capacitor 234. The output of the amplifier 224 is connected through a resistor 236 to ground and through a capacitor 238, resistor 240, and resistor 242 to the input of an amplifier 244. The junction of resistor 240 and 242 is connected to ground through a capacitor 246, creating a predetermined tone compensation to reduce the high frequency signal and remove spurious clipping signals in speech. The amplifier 244 includes a feedback resistor 248 and capacitor 250 that contribute to the predetermined tone and gain characteristics. The output of the amplifier 244 is connected to ground through a resistor 252, to a full-wave rectifier 260, and through a coupling capacitor 254 to a carrier oscillator 280. The full-wave rectifier 260 provides a positive going signal corresponding to the positive (relative to the voltage of non-inverting inputs) of the amplifiers 244 and 264 portions of the signal output of the amplifier 244 through a diode 262, and positive going peaks corresponding to the negative portions of the amplifier 244 output signal by first inverting the signal with an amplifier 264 in combination with resistors 266 and 268. The output from the amplifier 264 is connected to ground through resistor 270 and through diode 272 to resistor 274, to provide the rectified output. The operating points for amplifiers 264 and 244 are provided by a voltage divider including a resistor 276 and a resistor 278 whose values are determined to provide a 2.5 volt bias point at the junction of resistors 276 and 278. The bias point voltage is filtered with capacitor 254 and connected through diode 256 to the non-inverting inputs of amplifiers 244 and 246, and to ground through a resistor 258.

The carrier oscillator 280 provides a saw-tooth output signal at the carrier frequency of the transmitter. The carrier oscillator 280 includes an amplifier 284 whose output is connected to the non-inverting input of an amplifier 282. The output of the amplifier 282 is connected to the non-inverting input of amplifier 284 through resistors 286 and 288. The frequency of the oscillator is established primarily by a feedback capacitor 290, resistor 292, and adjustable resistor 294. The resistor 294 is typically adjusted to provide an oscillator frequency of 140 KHz for the handset, and 200 KHz for the base unit. The carrier oscillator 280 is frequency modulated by the audio signal (from the amplifier and conditioner 210), applied to amplifier 282 through a capacitor 254 and a resistor 296. The inverting inputs to the amplifiers 282 and 284 are connected in common to ground through a capacitor 298 and to the output of amplifier 284 through a resistor 300. The junction of resistors 288 and 286 are connected to ground through a resistor 302 and to a stablized voltage source through a resistor 304, to minimize the sensitivity of the transmitter to fluctuations in supply voltage. The stablized voltage source includes a Zener diode 306 connected to the positive supply through a resistor 310, bypassed by a capacitor 308, providing a base voltage for a transistor 312, which in turn provides an emitter-following output to the resistor 304.

An LED driver and AM modulator 320 receives the FM modulated saw-toothed wave output signal from the carrier oscillator 280 and provides a periodic current pulse through infrared emitting LEDs 321 through 327. The current pulse is of short duration, and generally of rectangular shape, providing near optimal signal power at the corresponding receiving diode detectors for the input power. In addition, there is an amplitude modulation of the driving amplitude perpulse, and of the pulse width, so that the transmitter power drain is reduced at center frequency or quiescent times, and increased with frequency deviation to provide a high noise immunity and counteract the effect of narrowband characteristics in the communication system. The driver and modulator 320, according to the present invention, provides a linear amplitude modulation of the power into the LEDs 321 through 327, without changing the LED pulse duty cycle, providing an improved overall efficiency. Moreover, the modulator of the present apparatus introduces minimal phase modulation.

The saw-tooth wave, FM modulated output of the oscillator 280 is applied to an amplifier 330 within the modulator 320 providing a rectangular shaped output pulse to a power FET 332, causing it to conduct with each positive wave. When conducting, the FET 332 causes a current to flow in an inductor 334. When the FET 332 is turned off in the interval between pulse outputs from amplifier 330, the inductor 334 continues to supply current, but now through a diode 336 into a storage capacitor 338, storing a predetermined amount of energy corresponding to the duration of time that FET 332 was conductive. The infrared transmitting LED's are connected in series with the capacitor 338 to a return path to ground through a power FET 340 and current limiting resistor 342.

The saw-tooth wave output signal from the carrier oscillator 380 is also applied to the inverting input of an amplifier 344. The amplifier 344 provides a pulse output signal when the saw-tooth input signal exceeds a voltage threshold applied to the amplifier's noninverting input and established at the junction between resistors 346 and 348 that are connected between the positive voltage supply and ground. The pulse-width is fixed, but its rate is determined by the saw-tooth frequency of the output of the carrier oscillator 280. The pulse output of the amplifier 344 is applied to the gate of the FET 340 grounding the cathode and the LEDs 321 through 327 with each FM modulated saw-tooth wave.

The amplitude of the infrared emissions are determined according to the amplitude of the voltage in the storage capacitor 338, and is adjusted according to the duty cycle of the signal received by the FET 332. The duty cycle of that signal is controlled by the signal applied to the inverting input of amplifier 330, and is determined by the relationship of the saw-tooth input signal and the voltage provided by the voltage divider, including resistor 350 and resistor 274, connected to the positive supply voltage and the output of the full-wave rectifier 260, respectively. Under the condition of no audio signal the full-wave rectifier 260 has a low output voltage, reducing the voltage at the inverting input of the amplifier 330 to a minimum, causing the duty cycle of the pulse output to be a minimum which in turn causes the voltage stored in the capacitor 338 to be a minimum. As the amplitude of the signal from the full-wave rectifier 260 increases, the voltage at the inverting input of the amplifier 330 also increases, thereby increasing the duty cycle of the output signal and the duration of the period when current is applied to the inductor 334. This in turns increases the charge on the capacitor 338. The capacitor 338 is then discharged through the LEDs 321 through 327 in response to the pulse applied to transistor 340, discussed above. In this manner, the intensity of the LED radiation, and the periodicity of the radiation are independently controlled.

Transistors 332 and 340 are biased by a signal from respective resistors 352 and 356, which is created by feedback from capacitor 338 through a resistor 358, and filtered by a capacitor 360 to remove carrier frequency components.

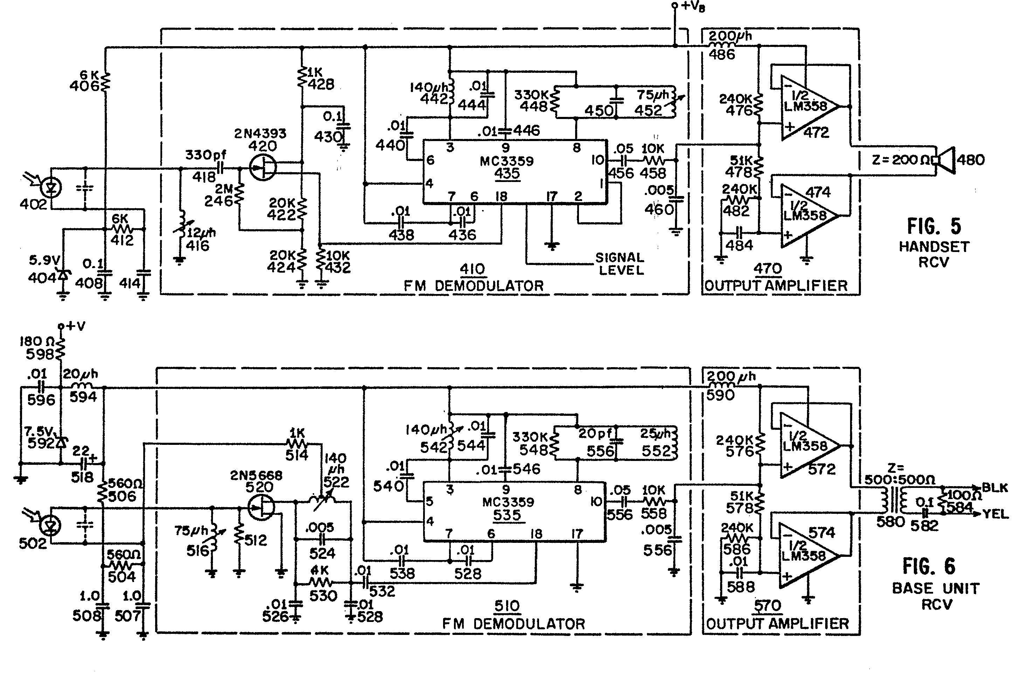

In the circuitry for the transmitter used in the handset, the carrier amplitude is affected by the level of the signal received from the base unit. This is accomplished by applying a D.C. strength signal from the system receiver demodulator (Fig. 5) to a circuit 370 which adjusts the D.C. level that controls a transistor 372, varying the impedance between the cathodes of diodes 262 and 272 and ground. This in turn varies the level of AM modulation, affecting overall output power inversely as a function of the received signal strength.

If the conduction of transistor 340 can be made to coincide with the turn-off of transistor 332, the capacitor 338 will be simultaneously charged, causing a somewhat constant LED pulse, according to the selected values of the inductor 334 and capacitor 338. Steady state operation of the circuit occures when the average voltage across capacitor 338 rises pulse by pulse until a sufficient LED pulse current exits to remove from capacitor 338 all of the energy transferred to it from the inductor 334. In particular, the greater the inductance of the inductor 334, the smaller the peak current the transistor 332 will have to handle, and therefore the $R_{on}$ or "on" resistance of the transister 332 will be less critical. Moreover, as a limit, inductor 334 must be small enough to store enough energy during the available conductor charge time. Furthermore, capacitor 338 should be large enough to result in a sufficiently rectangular LED current pulse. Capacitor 338 should be small enough to permit whatever amplitude modulation rate (pulse-to-pulse slew rate) may be desired.

A receiver circuit for the handset unit is shown in detail in Fig. 5. The infrared signal radiated by the transmitter is received by an infrared photo-diode 402 connected across an input of an FM demodulator 410 and a biasing circuit. The biasing circuit includes a Zener diode 404 connected between ground and, through a resistor 406, the battery supply voltage. Its voltage is filtered by a capacitor 408. The voltage across capacitor 408 is further filtered by a low pass network, including a series resistor 412 and a shunt capacitor 414. The cathode of the photo-diode 402 is connected to the high side of capacitor 414.

The anode of the diode 402 is connected to the FM demodulator 410. Within the FM demodulator, a tuned input circuit is formed by a shunt inductor 416 and the capacitance across the photo-diode 402. The resonance frequency is adjusted by adjusting the inductor 416. A low A.C. impedance is provided from the inductor 416 by a series capacitor 418 to the input of an FET transistor 420. The transistor 420 is biased by a voltage divider comprising resistors 422, 424 and 428 and a connecting resistor 426, whose value determines FET Q by shunting the tuned input circuit to define the bandwidth of the tuned circuit. The drain of the transistor 420 is connected to the positive voltage supply through the resistor 428 and is bypassed by a capacitor 430.

The output signal of transitor 420 appears across a source resistor 432, and is coupled to an integrated circuit demodulator 435 through a coupling capacitor 434. The integrated circuit demodulator 435 is commonly available, such as a Motorola MC 3359. The associated capacitors, conductors and resistors 436 through 452 are specified according to the specifications published for that unit. An inductor 454 decouples the power supply from the FM demodulator 410 and the bias supply for the photo-diode 402 from the battery. The IC demodulator unit 435 includes a signal level output that is used to control the level of the AM modulation through circuit 370.

The audio output from the demodulator circuit 435 is coupled through series capacitor 456 and resistor 458, to a noninventing input of an amplifier 472 and, through a resistor 428 to a noninventing input of an amplifier 474 in an output amplifier section 470. Roll-off compensation is provided by a combination of resistor 458 and a shunt capacitor 460. The amplifier 472 provides unity power gain with some current gain, and is typically a type LM358 of National Semiconductor, or other manufacturers.

The output of the amplifier 472 is connected to a loudspeaker 480, whose return lead is connected to the output of a second amplifier 474 in a push-pull configuration. The operating potentials of amplifiers 472 and 474 are determined by a resistor voltage divider including resistors 476, 478, and 482. Resistor 482 is bypassed by a capacitor 484 to provide an A.C. ground. The operating power to amplifier 470 is de-coupled by an inductor 486, connected in the positive power supply line.

The base unit receiver schematic diagram is shown in Fig. 6. The base unit receiver is similar to the handset receiver, the differences including a different carrier frequency, and the operation and configuration of the FET preamplifier. A receiving photo-diode 502 is biased through a resistor 598 and inductor 594 by the positive voltage supply, bypassed by a capacitor 508 and received through resistors 506 and 504, which is also bypassed to ground by a capacitor 507. The capacitor 507 provides a high frequency AC path to ground and is connected to the cathode of the diode 502. While a single photo-diode 502 is shown (402 in Fig. 5 discussed above), it may optionally be supplemented by additional diodes connected in parallel. A tuned input circuit is formed by an inductor 516 in parallel with the capacitance of the diode 502. A resistor 512 is connected across indicator 516 and determines the bandwidth of the resonant circuit. The anode of the photodiode 502 is connected to the gate of an FET transistor 520 and its cathode is connected to ground. The source of the transistor 520 is connected to ground, and the drain is connected to a "pi" filter network, designed to pass a 140 KHz signal and block a 200 KHz signal. The drain of transistor 520 is returned to the positive power supply through a resistor 514, connected to a tap in an inductor 522 included in the "pi" network. The "pi" network further includes capacitors 524, 526 and 528, and a resistor 530 according to known techniques of filter design.

The resulting filtered and amplified signal is coupled to an integrated circuit demodulator 535 through a coupling capacitor 530. The integrated circuit demodulator 535 and the associated components 536 through 555 are determined according to the desired frequency response and operation characteristics as described above. The resulting demodulated audio signal is applied to an amplifier system 570 through a capacitor 556 and a de-emphasis network including a resistor 558 and a capacitor 560.

The amplifier system 570 includes a unity gain amplifier 572 and operating point amplifier 574, whose outputs are connected to opposite primary terminals of a transformer 580. The transformer 580 has a one-to-one turns ratio and a 500 ohm impedance. The secondary signal is coupled to the telephone base microphone wires through a capacitor 582 and a shunt resistor 584. The operating point of the amplifiers 572 and 574 is determined by a voltage divider including resistors 576, 578, and 586, and a bypass capacitor 588. The positive voltage supply to the amplifier 570 is decoupled by a inductor 590.

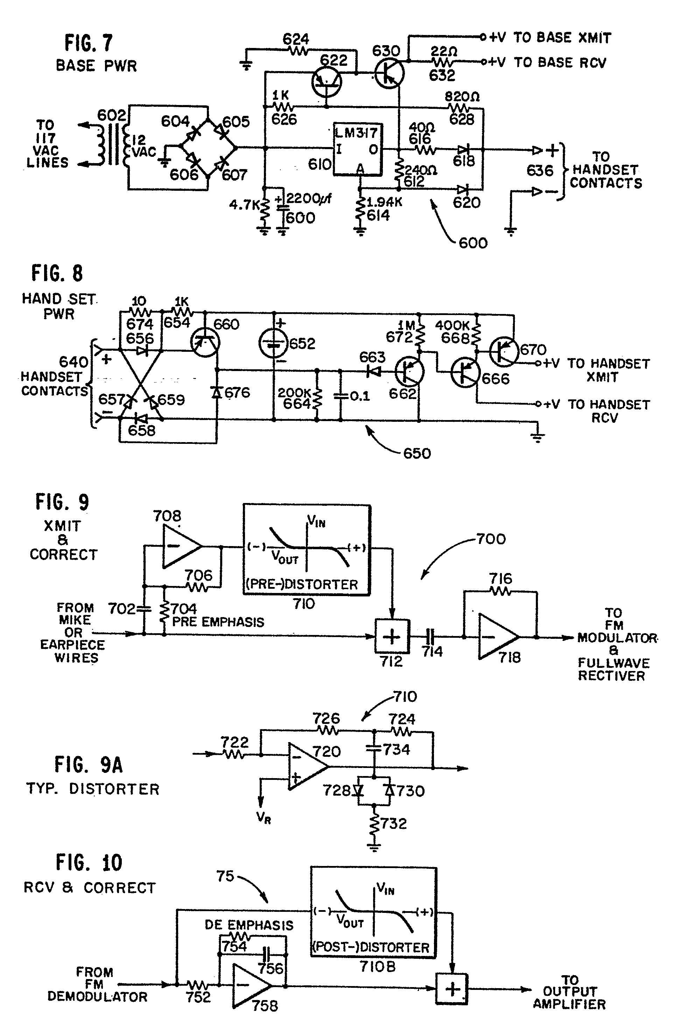

A positive power supply, shown in Fig. 7, is connected to power the base unit receiver circuitry. The receiver positive voltage is filtered by a capacitor 596 and series resistor 598, and a Zener diode 592 is connected to limit the voltage to +7.5V on capacitor 596 (Fig. 6). The Zener voltage is filtered through an inductor 594 and bypassed by a capacitor 518.

In the base unit power supply and battery charging circuit shown in Fig. 7, a transformer 602 receives 117 A.C. line power and provides a 12 volt secondary voltage. This 12 volt signal is full-wave rectified by bridge diodes 604 through 607 to provide a rectified D.C. output voltage. The D.C. voltage is filted by a capacitor 608 and is regulated by a integrated circuit 610, typically a part number LM317 made by National Semiconductor or other manufacturers. The voltage from the regulator 610 is determined by a resistor network including resistors 612 and 614 according to known techniques. A positive voltage from the "O" output terminal of the regulator 610 is connected to handset positive contact 636 (element 80 in Fig. 2) through a resistor 616 and diode 618. The "A" output voltage, connected to the junction between resistors 614 and 612, is also coupled to the handset contacts through diode 620. The emitter of a transistor 622 is connected to the filter recifier output. The collector is connected to ground through a resistor 624. The transistor 622 is connected to a bias network including resistors 626 and 628, which are connected respectively to the emitter of transistor 622 and the handset positive contact on one hand, and joined together at the base on the other. They cause transistor 622 to conduct, in turn causing a transistor 630 to conduct. The emitter of transistor 630 is connected to the "O" output of the regulator 610. The collector of transistor 630 serves as the source of the positive voltage of the base unit transmitter. The base unit receiver receives a positive voltage from the collector of transistor 630 through a resistor 632.

The handset power and battery charger circuit schematic is shown in detail in Fig. 8. The handset contacts 640 (element 80 in Fig. 2) mate with the contacts 636 to receive charging current for a battery 652 through a resistor 654 and polarity independent bridge rectifier diodes 656, 657, 658, and 659 when the handset rests in the cradle of the base unit. When the voltage drop across resistor 654 is reduced at full battery charge, a transistor 660 becomes cut-off, allowing a resistor 664 to pull a transistor 662 into conduction, causing the emitter thereof to drop in voltage to a level sufficient to cause a transistor 666 to conduct and cause current to flow through a resistor 668 and provide a positive potential through the handset receiver. The voltage drawn across resistor 668 causes transistor 670 to conduct, providing a positive potential to the handset transmitter. When the battery is low and charging is in progress, the voltage drop across resistor 654 causes transistor 660 to conduct, which in turn pulls the base of transistor 662 to the plus voltage terminal of the battery, causing transistor 662 to become cut off. When transistor 662 is cut off, resistor 672 pulls the transistor 666 into cut off as well, removing the positive potential from the handset. Similarly, transistor 670 is cutoff, removing the positive supply to the handset transmitter.

Since the photo-diode front end of the receiver experiences a direct increase in the signal-to-noise ratio proportional to the shunt resistance of the resonating tank circuit across the diode, increasing this resistance (and therefore narrowing the bandwidth) in the same ratio of the transmitter idle power reduction will preserve the same idle signal-to-noise ratio. Since the signal level increases proportionally to the frequency deviation (due to the FM/AM modulation) and the tank skirts have 6dB/octave roll off, the signal leaving the front end and the tank circuit will exhibit little variation with modulation, and the signal-to-noise ratio under low modulation will be at least as good as conventional full power FM systems. It remains to remove the effect of phase distortion introduced by the narrow tank circuit on the FM signal.

One method of correction involves pre-distortion according to the block diagram shown in Fig. 9. The audio signal is received from the microphone by a pre-emphasis circuit including a capacitor 702 and resistor 704, connected in combination with amplifier 708 and feed back resistor 706, to provide a desired amount of pre-emphasis. The output from the amplifier 708 is applied to a pre-distortor 710 which provides a nonlinear transfer characteristic as shown within the block. The resulting output signal is summed, by a summer 712, with the microphone signal to provide a composite signal output. This composite output signal is applied to a differentiating amplifier to transform the signal from a phase proportional base-band to a pre-distorted frequency proportional base-band. The differentiator includes an amplifier 718, a capacitor 714 and a resistor 716 connected according to techniques known in the art.

A schematic of the base unit pre-distortor 710 is shown in Fig. 9A. In this unit, an amplifier 720 receives an input signal through a resistor 722 and a feedback signal through resistors 724 and 726. The output of the amplifier is directly proportional to the amplifier input according to the ratio of the resistor values until the voltage at the junction of resistors 724 and 726 exceeds the conduction voltage of a pair of shunt diodes 728 and 730. At such time, the diodes begin to conduct, causing resistor 732 and capacitor 734 to become part of the circuit, reducing the feedback and increasing again.

Alternatively, corrective post-distortion can be introduced at the output of the demodulator of the receiver along with de-emphasis, as shown in the block diagram of Fig. 10. The signal from the FM demodulator is received by a post distortor 710B which provides the same transfer function as distortor 710 of Fig. 9. The output of the distortor 710B is summed with a de-emphasized signal from the FM demodulator, to provide an output signal applied to amplifier 470 or 570 of Figs. 5 and 6 respectively. The de-emphasis is provided by a network including resistors 752, 754 and capacitor 756 connected around an amplifier 758 operating inversely to the preemphasis associated with Fig. 9. The break points of the distortor circuit are selected to compensate the phase shift versus frequency of the particular tank circuit of the receiver input.

Modifications to these and other implementations of the FM/AM communication system described above may be made by one skilled in the art and are within the scope of the present invention. Therefore, the present invention is not to be limited except as defined by the following claims.

- 14 -                    0162662

CLAIMS

1.      A communication system comprising:

at least first and second stations each having transmitting means and receiving means operative to permit signals
to be exchanged between said stations;

means associated with at least one of said stations
for controlling the associated transmitting means to automatically vary its transmitted output level in accordance with
the distance between it and another station with which it
is exchanging signals.

2.      The system of claim 1 wherein said transmitter controll-
means includes:

means for detecting the strength of signals received
at the associated station from another station; and

means for varying the transmitter means output level
inversely with the received signal strength.

3.      The system of claim 2 wherein:

said transmitter provides a pulse output; and

said varying pulse adjusts the pulse power in each
said pulse.

4.      The system of claim 3 wherein said pulses are adjusted
in level.

5. In a communication system a first transmitter comprising:

an oscillator having a center frequency;

means for frequency modulating said center frequency according to a baseband signal to produce a frequency modulated signal; and

means for amplitude modulating said frequency modulated signal according to the magnitude of said baseband signal to reduce the frequency modulated signal when the amplitude of said baseband signal is low and to increase the frequency modulated signal with frequency deviation from said center frequency.

6. The communication system of claim 5, further including:

means for providing an absolute value of said baseband signal, wherein the amplitude of the oscillator signal at the output of the means for amplitude modulating corresponds to the absolute value of said baseband signal.

7. The communication system of claim 6, wherein:

said means for providing an absolute value comprises a full-wave rectifier.

8. The communication system of claim 5, wherein:

said oscillator provides a pulse output at said center frequency; and said means for amplitude modulating comprises a pulse-width modulator.

9. The communication system of claim 5, further including:

light emitting diodes providing electromagnetic radiation corresponding to the amplitude modulated frequency modulated signal.

10. The communication system of claim 9, wherein:

said electromagnetic radiation is infrared light radiation.

11. The communication system of claim 5, further including means for demodulating an amplitude modulated frequency modulated signal to recover a second baseband signal.

12. The communication system of claim 11, wherein: said means for demodulating includes an FM demodulator.

13. The communication system of claim 11, wherein phase distortion results from narrowbandedness and means are provided for correcting the communication system phase distortion.

14. The communication system of claim 13, wherein said means for correcting communication system phase distortion includes means responsive to said baseband signal to provide a signal applied as a phase adjustment to the baseband signal applied to said means for frequency modulating.

15. The communication system of claim 13, wherein said means for demodulating includes said means for correcting communication system phase distortion.

16. The communication system of claim 11, further including: second means for transmitting the second baseband signal at a second frequency, the transmitted amplitude thereof being adjusted according to the amplitude of the recovered baseband signal.

17. The communication system of claim 16, wherein said second means for transmitting includes: a second oscillator producing a center frequency; means for frequency modulating said center frequency according to said second baseband signal to produce a second frequency modulated signal; and second means for amplitude modulating said second frequency modulated signal according to the magnitude of said second baseband signal to reduce the frequency modulated signal when the amplitude of said baseband signal is low and to increase the frequency modulated signal with frequency deviation from said center frequency.

18.    The communication system of claim 16, including means associated with said first transmitting means including:

second means for demodulating said second amplitude modulated frequency modulated signal to recover the second baseband signal; and

a telephone line interface connected to provide said first mentioned baseband signal to said first transmitting means, and to apply the recovered second baseband signal to a telephone line system.

19.    The communication system of claim 16, wherein:

said means for demodulating and said second means for transmitting are contained within a portable unitary housing, further including a battery supplied power supply.

20.    The communication system of claim 19, further including:

means for charging the battery of said power supply, being contained external to said portable unitary housing, and removably connected thereto.

0162662

1/4

WAVE FORMS

FIG. 1A

FIG. 1B

FIG. 1C
LOW LEVEL MODULATION

FIG. 1D
HIGH LEVEL MODULATION

FIG. 2

FIG. 3

2/4

FIG. 4
XMIT

BASE & HANTSET TRANSMITTER

0162662

0162662

3/4

FIG. 7
BASE PWR

FIG. 8
HAND SET PWR

FIG. 9
XMIT & CORRECT

FIG. 9A
TYP. DISTORTER

FIG. 10
RCV & CORRECT